(19) Europäisches Patentamt
European Patent Office
Office européen des brevets

(11) EP 3 051 862 B1

(12) EUROPEAN PATENT SPECIFICATION

(45) Date of publication and mention of the grant of the patent:
**14.12.2022 Bulletin 2022/50**

(21) Application number: **14791761.1**

(22) Date of filing: **23.05.2014**

(51) International Patent Classification (IPC):
***H04L 5/00*** *(2006.01)* ***H04W 72/04*** *(2009.01)*
***H04W 48/12*** *(2009.01)* *H04L 5/14 (2006.01)*

(52) Cooperative Patent Classification (CPC):
**H04W 48/12; H04L 5/0094; H04W 72/042; H04W 72/0446;** H04L 5/0007; H04L 5/0053; H04L 5/1469

(86) International application number:
**PCT/CN2014/078328**

(87) International publication number:
**WO 2014/177095 (06.11.2014 Gazette 2014/45)**

(54) **UPLINK/DOWNLINK CONFIGURATION INFORMATION NOTIFICATION AND ACQUISITION METHOD, BASE STATION AND USER EQUIPMENT**

VERFAHREN ZUR AUSGABE UND ERFASSUNG VON AUFWÄRTS-/ABWÄRTSKONFIGURATIONSINFORMATIONEN, BASISSTATION UND BENUTZERVORRICHTUNG

PROCÉDÉ DE NOTIFICATION ET D'ACQUISITION D'INFORMATIONS DE CONFIGURATION DE LIAISON MONTANTE/LIAISON DESCENDANTE, STATION DE BASE ET ÉQUIPEMENT UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2013 CN 201310452447**

(43) Date of publication of application:
**03.08.2016 Bulletin 2016/31**

(73) Proprietor: **ZTE Corporation**
**Shenzhen, Guangdong 518057 (CN)**

(72) Inventors:
- **LIANG, Chunli**
  **Shenzhen**
  **Guangdong 518057 (CN)**
- **DAI, Bo**
  **Shenzhen**
  **Guangdong 518057 (CN)**
- **LI, Yu Ngok**
  **Shenzhen**
  **Guangdong 518057 (CN)**
- **XIA, Shuqiang**
  **Shenzhen**
  **Guangdong 518057 (CN)**

(74) Representative: **Canzler & Bergmeier Patentanwälte Partnerschaft mbB**
**Despag-Straße 6**
**85055 Ingolstadt (DE)**

(56) References cited:
**CN-A- 101 998 270**
**CN-A- 102 594 438**
**CN-A- 102 594 513**
**CN-A- 102 907 160**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



(Cont. next page)

- LG ELECTRONICS: "Details of UL-DL Reconfiguration Message", 3GPP DRAFT; R1-133366 DETAILS OF UL-DL RECONFIGURATION MESSAGE_LG, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG1, no. Barcelona, Spain; 20130819 - 20130823 10 August 2013 (2013-08-10), XP050716480, Retrieved from the Internet: URL:http://www.3gpp.org/ftp/tsg_ran/WG1_RL1/TSGR1_74/Docs/ [retrieved on 2013-08-10]
- SAMSUNG: "Signaling for TDD UL-DL Reconfiguration", 3GPP DRAFT; R1-133094 SIGNALING FOR TDD UL-DL RECONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Barcelona, Spain; 20130819 - 20130823 10 August 2013 (2013-08-10), XP050716314, Retrieved from the Internet: URL:http://www.3gpp.org/ftp/tsg_ran/WG1_RL1/TSGR1_74/Docs/ [retrieved on 2013-08-10]
- ZTE: "Details of Signaling for TDD UL-DL configuration", 3GPP DRAFT; R1-133051 DETAILS OF SIGNALING FOR TDD UL-DL RECONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG1, no. Barcelona, Spain; 20130819 - 20130823 10 August 2013 (2013-08-10), XP050716279, Retrieved from the Internet: URL:http://www.3gpp.org/ftp/tsg_ran/WG1_RL1/TSGR1_74/Docs/ [retrieved on 2013-08-10]
- POTEVIO: "On signalling mechanism for TDD UL-DL reconfiguration", 3GPP DRAFT; R1-133561, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Barcelona, Spain; 20130819 - 20130823 9 August 2013 (2013-08-09), XP050716106, Retrieved from the Internet: URL:group common Phttp://www.3gpp.org/ftp/tsg_ran/WG1_RL1/TSGR1_74/Docs/ [retrieved on 2013-08-09]
- INTEL CORPORATION: "Signaling mechanism for TDD UL/DL reconfiguration", 3GPP DRAFT; R1-132926, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Barcelona, Spain; 20130819 - 20130823 10 August 2013 (2013-08-10), XP050716166, Retrieved from the Internet: URL:http://www.3gpp.org/ftp/tsg_ran/WG1_RL1/TSGR1_74/Docs/ [retrieved on 2013-08-10]
- SAMSUNG: "Remaining Details of Aperiodic CSI Multiplexing", 3GPP DRAFT; R1-124919 REMAINING DETAILS OF APERIODIC CSI MULTIPLEXING -- FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG1, no. New Orleans, USA; 20121112 - 20121116 3 November 2012 (2012-11-03), XP050662856, Retrieved from the Internet: URL:http://www.3gpp.org/ftp/tsg_ran/WG1_RL1/TSGR1_71/Docs/ [retrieved on 2012-11-03]

## Description

## TECHNICAL FIELD

The disclosure relates to the technical field of mobile communication, and in particular to uplink and downlink configuration information notification methods, a base station and a computer-readable storage medium.

## BACKGROUND

A Time Division Duplex (TDD) system divides uplink resources (sent to a base station from a terminal) and downlink resources (sent to the terminal from the base station) in a time domain, and allocates the uplink and downlink resources usually by taking a time slot or subframe as a unit. In general, a base station semi-statically notifies all terminals in a cell of uplink and downlink resource allocation by broadcast signalling.

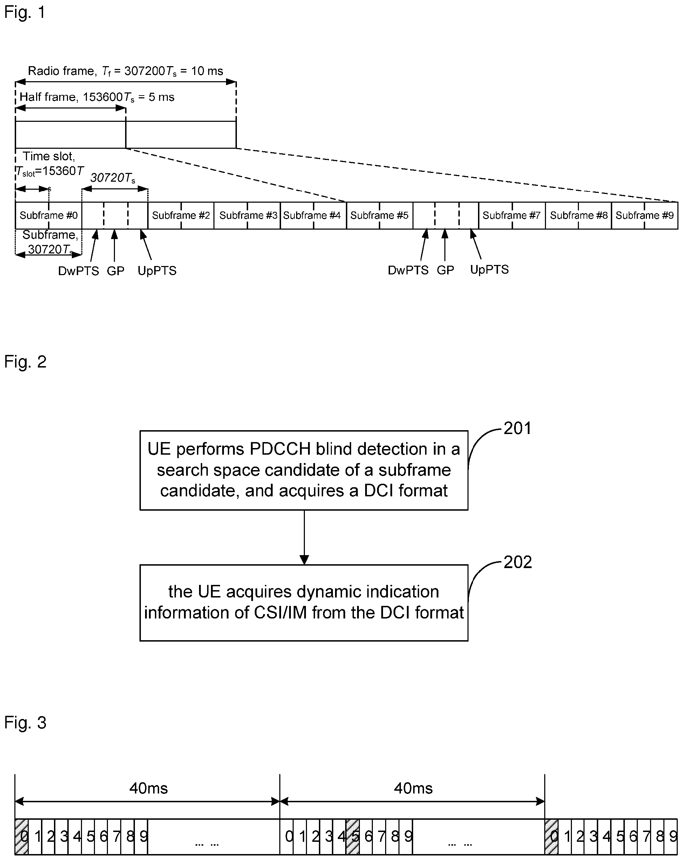

For example, Fig. 1 is a frame structure in a TDD mode of a Long Term Evolution (LTE) system, which is also called frame structure type 2. In the frame structure, a radio frame of 10ms (i.e. 307,200Ts, Ts is a sampling interval and 1Ts=1/30,720,000s) is divided into two half frames, and each half frame has a length of 5ms. Each half frame includes 5 subframes with a length of 1ms, and a function of each subframe is shown in Table 1, wherein D represents a downlink subframe configured to transmit a downlink signal; U represents an uplink subframe configured to transmit an uplink signal, and an uplink or downlink subframe is further divided into two 0.5ms time slots; and S represents a special subframe, including three special time slots, i.e. a Downlink Pilot Time Slot (DwPTS) configured to transmit a downlink signal, a Guard Period (GP) and an Uplink Pilot Time Slot (UpPTS) configured to transmit an uplink signal.

Table 1

| Configuration | Transfer point period | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5ms | D | S | U | U | U | D | S | U | U | U |
| 1 | 5ms | D | S | U | U | D | D | S | U | U | D |
| 2 | 5ms | D | S | U | D | D | D | S | U | D | D |
| 3 | 10ms | D | S | U | U | U | D | D | D | D | D |
| 4 | 10ms | D | S | U | U | D | D | D | D | D | D |
| 5 | 10ms | D | S | U | D | D | D | D | D | D | D |
| 6 | 5ms | D | S | U | U | U | D | S | U | U | D |

An LTE system adopts a downlink Orthogonal Frequency Division Multiplexing (OFDM) technology in a downlink direction, and adopts a Single Carrier-Frequency Division Multiple Access (SC-FDMA) technology which is or called a Discrete Fourier Transform (DFT) Spread OFDM technology) in an uplink direction. Under a normal Cyclic Prefix (CP) condition, a time slot consists of 7 OFDM symbols or SC-FDMA symbols; and under an extended CP condition, a time slot consists of 6 OFDM symbols or SC-FDMA symbols. For example, for an ordinary CP, a Resource Element (RE) has a bandwidth of 15kHz, and occupies one OFDM or SC-FDMA symbol in a time slot. A Resource Block (RB) occupies 12 REs on the frequency domain, and occupies one time slot on the time domain.

An LTE system sends a downlink data service through a Physical Downlink Shared Channel (PDSCH), and sends an uplink data service through a Physical Uplink Shared Channel (PUSCH). In addition, an LTE physical layer further includes some control channels configured to assist transmission of uplink and downlink data, for example: a Physical Downlink Control Channel (PDCCH) or Enhanced Physical Downlink Control Channel (EPDCCH) configured to bear the following control information: uplink scheduling signalling, downlink scheduling signalling and uplink power control signalling respectively, wherein the uplink scheduling signal, such as Downlink Control Information (DCI) format 0/4, is configured to indicate information such as an uplink resource allocation situation of a terminal and a modulation and coding scheme of a transmission block; the downlink scheduling signalling, such as DCI format 1/1A/1B/1C/1D/2/2A/2B/2C/2D, is configured to indicate information such as a downlink resource allocation condition of the terminal and the modulation and coding scheme of the transmission block; and the uplink power control signalling, such as DCI format 3/3A, is configured to indicate a regulation condition of uplink transmitted power of the terminal. The control channels further include: a Physical Hybrid Automatic Repeat Request Indicator Channel (PHICH) configured to indicate whether an uplink data transmission result is correct or not.

Each piece of DCI is finally sent on a PDCCH in form of one or multiple Control Channel Elements (CCEs) after being subjected to Cyclic Redundancy Check (CRC) addition, channel coding, rate matching and the like, wherein it is also necessary to further scramble a CRC by adopting a corresponding Radio Network Temporary Identity (RNTI) during CRC addition.

Physical resources transmitted by a PDCCH are represented by CCEs, a CCE has 9 Resource Element Groups (REGs), i.e. 36 REs, and one PDCCH may occupy 1, 2, 4 or 8 CCEs. For four PDCCHs occupying 1, 2, 4 and 8 CCEs respectively, treelike aggregation is adopted, that is, the PDCCH occupying 1 CCE may start from any CCE position, the PDCCH occupying 2 CCEs starts from an even CCE position, the PDCCH occupying 4 CCEs starts from a CCE position which is an integral multiple of 4, and the PDCCH occupying 8 CCEs starts from a CCE position which is an integral multiple of 8. In a radio frame, if a normal CP is adopted, then the first 1 to 3 OFDM symbols of a first time slot of each subframe may bear physical resources of a PDCCH, and other symbols may bear physical resources of a PDSCH.

For each aggregation level, a standard defines a search space, including a common search space and a UE-specific search space. The number of CCEs of the whole search space is determined by the number of OFDM symbols occupied by a control area indicated by a Physical Control Format Indicator Channel (PCFICH) in each downlink subframe and the group number of PHICHs. UE performs blind detection on all possible PDCCH code rates according to a DCI format of a transmission mode (i.e. different aggregation levels) in the search space.

In some wireless communication scenarios, uplink and downlink services in a service area of a base station change tremendously, and for example: in some small cells or home environments, a small number of users are served by a base station, a system load is lower, and a proportion of uplink data size to downlink data size in a service area changes rapidly, so that semi-static allocation of uplink and downlink resources of a TDD system may influence resource allocation efficiency. Under such a background, LTE Release 12 (R12) introduces a dynamic uplink and downlink configuration regulation function to a TDD mode. However, how to rapidly notify a terminal of uplink and downlink configurations adopted by a current cell by a base station is still a problem to be solved.

After a dynamic uplink and downlink configuration regulation function is configured, transmission directions of some subframes are unfixed. In order to ensure maximal adaptation to a service change, reconfiguration among 7 TDD uplink and downlink configurations is supported. In an uplink and downlink configuration supporting system, subframes may be divided into three types: a fixed uplink subframe (which is an uplink subframe before and after reconfiguration, and includes a special subframe), a fixed downlink subframe (which is a downlink subframe before and after reconfiguration), and a flexible subframe (a subframe of which a direction may be changed before and after reconfiguration). According to 7 TDD uplink and downlink configurations supported by an existing system, distribution of the three types of subframes is shown in Table 2, wherein D represents a fixed downlink subframe, S represents a special subframe, U represents a fixed uplink subframe and F represents a flexible subframe.

Table 2

| Subframe number | | | | | | | | | |
|---|---|---|---|---|---|---|---|---|---|
| 0 | 1 | 2 | 3 | 4 | 5 | 6 | 7 | 8 | 9 |
| D | S | U | F | F | D | S | F | F | F |

In 3GPP TSG RAN WG1 Meeting #74, many companies, such as LG ELECTRONICS, SAMSUNG, ZTE, POTEVIO and INTEL CORPRATION, propose some drafts with respect to TDD UL/DL reconfiguration, such as 3GPP draft R1-133366 by LG ELECTRONICS: "Details of UL-DL Reconfiguration Message". To some extent, there is provided that a new DCI for UL-DL reconfiguration is sent on common search space in these drafts. However, from the point of downlink interference, interference to a fixed downlink subframe is different from interference to a flexible subframe, so that Channel State Information (CSI)/Interference Measurement (IM) is required to be improved to a certain extent, and for example, some dynamic signalling is required to support dynamic CSI/IM. However, how a base station dynamically notifies UE to perform dynamic CSI/IM is also a problem to be solved.

## SUMMARY

In order to solve the existing technical problems, the embodiments of the disclosure provide uplink and downlink configuration information notification and acquisition methods, a base station and UE.

The invention, which is defined by the claims, provides a method for notifying uplink and downlink configuration information, which may include that:

a base station sends to User Equipment, UE, a Downlink Control Information (DCI) format through a Physical Downlink Control Channel (PDCCH) in a search space, wherein the search space comprises a common search space and/or a UE group common search space and the DCI format bears uplink and downlink configuration information configured to indicate uplink and downlink configuration.

Herein, the DCI format comprises a plurality of control fields, in which at least one control field comprises the uplink and downlink configuration information.

Here, the DCI format bearing the uplink and downlink configuration information can have a same number of bits as a UE-specific DCI format X, or may have a same number of bits as one of DCI formats sent in the common search space by the base station, the X being a predefined value.

Preferably, the method may further include that:

the base station configures a sending period and a sending subframe of the DCI format bearing the uplink and downlink configuration information through high-layer signalling; or, the sending period and the sending subframe are agreed on by a sending party and a receiving party,
wherein there may be one or multiple sending subframes.

Here, when there are multiple sending subframes, the step that the base station sends the DCI format may include that:
the base station selects one of the multiple sending subframes for sending the DCI format when the base station sends the DCI format in a first radio frame of the sending period.

Here, when the base station sends a UE-specific DCI format on the subframe where the DCI format bearing the uplink and downlink configuration information is sent, a search space of the sent UE-specific DCI format may include a common search space, and/or a UE group common search space, and/or a UE-specific search space.

Here, when the UE-specific DCI format is sent in the UE group common search space, the UE-specific DCI format is a DCI format X, wherein the UE-specific DCI format X has a same number of bits as the DCI format bearing the uplink and downlink configuration information; and
when the UE-specific DCI format is sent in the UE-specific search space, the UE-specific DCI format is a DCI format Y, and the UE-specific DCI format Y has a different number of bits from the DCI format bearing the uplink and downlink configuration information.

Here, the DCI format bearing the uplink and downlink configuration information may be scrambled through a RNTI of a UE group, and the UE-specific DCI format may be scrambled through an RNTI of the UE.

According to the invention, the dynamic indication information of CSI/IM includes group information of CSI/IM and subframe information of CSI/IM.

Here, the group information of CSI/IM may be configured to indicate a CSI measurement/reporting subframe set to which a measurement result obtained by CSI/IM measurement performed by the UE based on CSI/IM resources belongs, wherein the CSI/IM resources may be configured into two groups by high-layer configuration, wherein one group may correspond to CSI measurement/reporting subframe set 1, and the other group may correspond to CSI measurement/reporting subframe set 1 or 2.

Here, the subframe information of CSI/IM may be configured to indicate a subframe having CSI/IM resources based on which the UE performs CSI/IM measurement, wherein the CSI/IM resources may be configured into N groups by high-layer configuration, wherein one group may correspond to CSI measurement/reporting subframe set 1, and the remaining N-1 groups may correspond to CSI measurement/reporting subframe set 2.

Preferably, the step that the base station transmits the DCI format to the UE may include that:

in a carrier aggregation system, when cross-carrier scheduling is not configured for each serving cell, the base station sends the DCI format bearing the uplink and downlink configuration information in a common search space and a UE group common search space of a first primary serving cell Pcell-X and a UE group common search space of a secondary serving cell Scell;
or,
the base station sends the DCI format bearing the uplink and downlink configuration information in a common search space and a UE group common search space of a Pcell-X;
or,
the base station sends the DCI format bearing the uplink and downlink configuration information in a common search space and a UE group common search space of a Pcell-X, a common search space and a UE group common search space of a second primary serving cell Pcell-Y and a UE group common search space of a Scell;
or,
the base station sends the DCI format bearing the uplink and downlink configuration information in a common search space and a UE group common search space of a Pcell-X, and a common search space and a UE group common search space of a Pcell-Y.

An embodiment of the disclosure further provides a method for acquiring uplink and downlink configuration information, which may include that:
UE performs PDCCH blind detection in a search space candidate of a subframe candidate, and acquires a DCI format, wherein the subframe candidate may be configured to transmit a DCI format bearing uplink and downlink configuration information.

Here, when the obtained DCI format bears the uplink and downlink configuration information, the method may further include that: the UE acquires dynamic indication information of CSI/IM from the DCI format.

Here, when the obtained DCI format bears a UE-specific DCI format, the method may further include that: the UE acquires the dynamic indication information of CSI/IM from the DCI format.

Here, the dynamic indication information of CSI/IM may include, but not limited to, group information of CSI/IM and subframe information of CSI/IM.

Here, the group information of CSI/IM may be configured to indicate a CSI measurement/reporting subframe set to which a measurement result obtained by CSI/IM measurement performed by the UE based on CSI/IM resources belongs, wherein the CSI/IM resources may be configured into two groups by high-layer configuration, wherein one group may correspond to CSI measurement/reporting subframe set 1, and the other group may correspond to CSI measurement/reporting subframe set 1 or 2.

Here, the subframe information of CSI/IM may be configured to indicate a subframe having CSI/IM resources based on which the UE performs CSI/IM measurement, wherein the CSI/IM resources may be configured into N groups by high-layer configuration, wherein one group may correspond to CSI measurement/reporting subframe set 1, and the remaining N-1 groups may correspond to CSI measurement/reporting subframe set 2.

Preferably, a search space candidate of the DCI format bearing the uplink and downlink configuration information may include a common search space and/or a UE group common search space.

Here, the UE group common search space may be a search space determined according to a common RNTI of a UE group, or a search space configured for a UE group by high-layer signalling, or a predefined UE group search space.

Preferably, a search space candidate of the UE-specific DCI format may include: a common search space, and/or a UE group common search space, and/or a UE-specific search space.

Here, the step that the UE performs PDCCH blind detection in the search space candidate may include that: the UE detects the DCI format bearing the uplink and downlink configuration information and a UE-specific DCI format X in the UE group common search space, wherein the DCI format bearing the uplink and downlink configuration information has a same size as the UE-specific DCI format X.

Here, the step that the UE performs PDCCH blind detection in the search space candidate may include that: the UE detects a UE-specific DCI format Y in the UE-specific search space of the subframe candidate, wherein the UE-specific DCI format Y has a size different from the DCI format bearing the uplink and downlink configuration information.

Preferably, the step that the UE performs PDCCH blind detection in the search space candidate may include that:

in a carrier aggregation scenario, when cross-carrier scheduling is not configured for each serving cell,
the UE detects the DCI format bearing the uplink and downlink configuration information in a common search space and a UE group common search space of a first primary serving cell Pcell-X and a UE group common search space of a secondary serving cell Scell;
or,
the UE detects the DCI format bearing the uplink and downlink configuration information in a common search space and a UE group common search space of a Pcell-X;
or,
the UE detects the DCI format bearing the uplink and downlink configuration information in a common search space and a UE group common search space of a Pcell-X, a common search space and a UE group common search space of a second primary serving cell Pcell-Y and a UE group common search space of a Scell;
or,
the UE detects the DCI format bearing the uplink and downlink configuration information in a common search space and a UE group common search space of a Pcell-X, and a common search space and a UE group common search space of a Pcell-Y.

Preferably, when the UE does not detect the DCI format bearing the uplink and downlink configuration information on the subframe candidate, the UE preforms periodic CSI reporting using one of the following manners:

manner 1: the UE determines a time-domain reference resource corresponding to periodic CSI reporting according to predefined uplink and downlink configuration information, wherein the predefined uplink and downlink configuration information may include uplink and downlink configuration information indicated in System Information Block 1 (SIB-1), or effective uplink and downlink configuration information which is received last time, or uplink reference configuration information configured by a high layer;
manner 2: periodic CSI is not sent, or a CSI report out of range is sent; and
manner 3: if the UE is required to perform CSI reporting in subframe n, then when subframe n-4 is a fixed downlink subframe, the UE sends a CSI report obtained by measurement on subframe n-4.

The invention further provides a base station, which includes a sending module, configured to send a Downlink Control Information (DCI) format to User Equipment (UE) through a Physical Downlink Control Channel (PDCCH) in a search space, wherein the search space comprises a common search space and/or a UE group common search space and the DCI format bears uplink and downlink configuration information configured to indicate uplink and downlink configuration.

Herein, the DCI format comprises a plurality of control fields, wherein at least one control field comprises the uplink and downlink configuration informationThe base station carries dynamic indication information of CSI/IM in the UE-specific DCI format, when the base station sends the UE-specific DCI format on a subframe where the DCI format bearing the uplink and downlink configuration information is not sent.

Preferably, the sending module may further be configured to configure a sending period and a sending subframe of the DCI format bearing the uplink and downlink configuration information through high-layer signalling; or, configured to agree with an opposite party at the base station on the sending period and the sending subframe,
wherein there may be one or multiple sending subframes.

Here, when the base station sends a UE-specific DCI format on the subframe where the DCI format bearing the uplink and downlink configuration information is sent, the sending module may be configured to send the UE-specific DCI format, wherein a search space of the sent UE-specific DCI format includes a common search space, and/or a UE group common search space, and/or a UE-specific search space.

An embodiment of the disclosure further provides UE, which may include a detection and acquisition module, configured to perform PDCCH blind detection in a search space candidate of a subframe candidate and acquire a DCI format, wherein the subframe candidate may be configured to transmit a DCI format bearing uplink and downlink configuration information.

Here, the detection and acquisition module may further be configured to acquire dynamic indication information of CSI/IM from the DCI format.

Preferably, the UE may further include a sending module, and when the UE does not detect the DCI format bearing the uplink and downlink configuration information on the subframe candidate, the sending module may be configured to determine a time-domain reference resource corresponding to periodic CSI reporting according to predefined uplink and downlink configuration information, wherein the predefined uplink and downlink configuration information may include uplink and downlink configuration information indicated in SIB-1, or effective uplink and downlink configuration information which is received last time, or uplink reference configuration information configured by a high layer; or,

the sending module may be configured to not send periodic CSI, or send a CSI report which is out of range;
or,
if the UE is required to perform CSI reporting in subframe n, then when subframe n-4 is a fixed downlink subframe, the sending module may be configured to report a CSI report obtained by measurement at subframe n-4.

An embodiment of the disclosure further provides a computer-readable storage medium, which may include a set of computer-executable instructions, the instructions being configured to execute the method for notifying uplink and downlink configuration information on a base station side in the embodiment of the disclosure.

An embodiment of the disclosure further provides a computer-readable storage medium, which may include a set of computer-executable instructions, the instructions being configured to execute the uplink and downlink configuration information acquisition method on a UE side in the embodiment of the disclosure.

According to the uplink and downlink configuration information notification and acquisition methods, base station and UE provided by the embodiments of the disclosure, a DCI format is adopted to carry uplink and downlink configuration information configured to indicate uplink and downlink configuration, so that a terminal can be rapidly notified of uplink and downlink configuration adopted by a current cell, the base station may also dynamically notify the UE to perform CSI/IM measurement without using additional physical-layer resources, delay is short, and a fuzzy problem is eliminated.

## BRIEF DESCRIPTION OF THE DRAWINGS

Fig. 1 is a schematic diagram of frame structure type 2 of an LTE system;

Fig. 2 is a flowchart of a method for acquiring uplink and downlink configuration information according to an embodiment of the disclosure, which is not part of the present invention but is present for illustration purposes only,;
Fig. 3 is a schematic diagram of configuration of a sending period and a sending subframe according to embodiment 1 of the disclosure;
Fig. 4 is a schematic diagram of dynamic grouping of IM according to embodiment 3 of the disclosure;
Fig. 5 is a schematic structure diagram of a DCI format bearing uplink and downlink configuration information according to embodiment 3 of the disclosure;
Fig. 6 is a schematic diagram of a mapping relationship between group information of CSI/IM and a CSI measurement/reporting subframe set according to embodiment 3 of the disclosure;
Fig. 7 is another schematic structure diagram of a DCI format bearing uplink and downlink configuration information according to embodiment 3 of the disclosure;
Fig. 8 is a schematic diagram of a mapping relationship between subframe information of CSI/IM and a subframe/subframe index configured by a high layer according to embodiment 4 of the disclosure;
Fig. 9 is another schematic diagram of a mapping relationship between subframe information of CSI/IM and a subframe/subframe index configured by a high layer according to embodiment 4 of the disclosure;
Fig. 10 is another schematic diagram of a mapping relationship between subframe information of CSI/IM and a subframe/subframe index configured by a high layer according to embodiment 4 of the disclosure;
Fig. 11 is another schematic diagram of a mapping relationship between subframe information of CSI/IM and a subframe/subframe index configured by a high layer according to embodiment 4 of the disclosure;
Fig. 12 is a schematic structure diagram of a base station according to an embodiment of the disclosure; and
Fig. 13 is a schematic structure diagram of UE according to an embodiment of the disclosure, which is not part of the present invention but is present for illustration purposes only.

## DETAILED DESCRIPTION

Implementation modes of the disclosure will be described below with reference to embodiments in detail, so as to adequately understand and accordingly implement an implementation process of how to solve the technical problems and achieve technical effects by virtue of a technical means in the disclosure.

Researches show that SIB/Radio Resource Control (RRC) protocol/Medium Access Control (MAC) and other high-layer signalling have long periods and delays, and have a fuzzy problem that a terminal and a base station have different understanding about a signalling execution time, thereby failing to meet a dynamic uplink and downlink reconfiguration requirement. Notifying uplink and downlink configuration through physical-layer signalling is mainly advantaged in short delay and no fuzzy problem. However, the use of physical-layer signalling also has some shortcomings as follows: an additional physical-layer resource is needed to be used and physical-layer control signalling overhead is increased.

In view of this, an embodiment of the disclosure provides a novel method for notifying uplink and downlink configuration information, wherein a DCI format is adopted to carry uplink and downlink configuration information configured to indicate uplink and downlink configuration, so that a base station can rapidly notifya terminal of an uplink and downlink configuration adopted by a current cell, and the base station may dynamically notify UE to perform CSI/IM.

An embodiment of the disclosure provides a method for notifying uplink and downlink configuration information, which includes that:

a base station transmits a DCI format to UE, the DCI format bearing uplink and downlink configuration information configured to indicate uplink and downlink configuration,
wherein the step that the base station transmits the DCI format to the UE includes that:
the base station sends the DCI format bearing the uplink and downlink configuration information through a PDCCH, and sends a search space of the PDCCH, where the search space of the PDCCH including a common search space and/or a UE group common search space.

Here, the UE group common search space is a search space determined according to a common RNTI of a UE group, or a search space configured for the UE group by high-layer signalling, or a predefined UE group search space.

Here, the DCI format bearing the uplink and downlink configuration information has a same number of bits as UE-specific DCI format X, or has a same number of bits as one of DCI formats sent in the common search space by the base station, X being a predefined value.

Preferably, the method further includes that:
the base station configures a sending period and a sending subframe of the DCI format bearing the uplink and downlink configuration information through high-layer signalling, or the sending period and the sending subframe are agreed on by the sending party and the receiving party, wherein there is one or multiple sending subframes.

Here, the time unit of the sending period is a radio frame, and the sending period is one or multiple radio frames.

Here, when there are multiple sending subframes, the step that the base station sends the DCI format includes that: the base station selects one of the multiple sending subframes for sending the DCI format when the base station sends the DCI format in a first radio frame of the sending period.

Here, when the UE-specific DCI format is sent in the UE group common search space, the UE-specific DCI format is the DCI format X, wherein the UE-specific DCI format X has a same number of bits as the DCI format bearing the uplink and downlink configuration information; and

when the UE-specific DCI format is sent in the UE-specific search space, the UE-specific DCI format is a DCI format Y, and the UE-specific DCI format Y has a different number of bits from the DCI format bearing the uplink and downlink configuration information.

Preferably, the DCI format bearing the uplink and downlink configuration information is scrambled through the RNTI of the UE group, and the UE-specific DCI format is scrambled through an RNTI of the UE.

In the embodiment of the disclosure, the DCI format bearing the uplink and downlink configuration information includes a plurality of control fields, wherein at least one control field includes the uplink and downlink configuration information.

Here, the control field including the uplink and downlink configuration information further includes dynamic indication information of CSI/IM.

In the embodiment of the disclosure, the UE-specific DCI format includes dynamic indication information of CSI/IM.

The dynamic indication information of CSI/IM includes, but not limited to, group information of CSI/IM and subframe information of CSI/IM.

Preferably, the group information of CSI/IM is configured to indicate a CSI measurement/reporting subframe set to which a measurement result obtained by CSI/IM measurement performed by the UE based on CSI/IM resources belongs, wherein the CSI/IM resources are configured into two groups by high-layer configuration, wherein one group corresponds to CSI measurement/reporting subframe set 1, and the other group corresponds to CSI measurement/reporting subframe set 1 or 2.

Preferably, the subframe information of CSI/IM is configured to indicate the subframe having CSI/IM resources based on which the UE performs CSI/IM, wherein the CSI/IM resources are configured into N groups by high-layer configuration, wherein one group corresponds to CSI measurement/reporting subframe set 1, and the remaining N-1 groups correspond to CSI measurement/reporting subframe set 2.

In the embodiment of the disclosure, the step that the base station transmits the DCI format to the UE includes that:

in a carrier aggregation system, when cross-carrier scheduling is not configured for each serving cell, the base station sends the DCI format bearing the uplink and downlink configuration information in a common search space and a UE group common search space of a first primary serving cell Pcell-X and a UE group common search space of a secondary serving cell Scell;

or, the base station sends the DCI format bearing the uplink and downlink configuration information in a common search space and a UE group common search space of a Pcell-X;

or, the base station sends the DCI format bearing the uplink and downlink configuration information in a common search space and a UE group common search space of a Pcell-X, a common search space and a UE group common search space of a second primary serving cell Pcell-Y and a UE group common search space of a Scell;

or, the base station sends the DCI format bearing the uplink and downlink configuration information in a common search space and a UE group common search space of a Pcell-X, and a common search space and a UE group common search space of a Pcell-Y.

An embodiment of the disclosure, which is not part of the present invention but is present for illustration purposes only, further provides a method for acquiring uplink and downlink configuration information, which, as shown in Fig. 2, includes:

step 201: UE performs PDCCH blind detection in a search space candidate of a subframe candidate, and acquires a DCI format, wherein the subframe candidate is configured to transmit a DCI format bearing uplink and downlink configuration information.

Preferably, when the obtained DCI format bears the uplink and downlink configuration information, or, when the obtained DCI format bears a UE-specific DCI format, the method further includes:

step 202: the UE acquires dynamic indication information of CSI/IM from the DCI format.

Here, the dynamic indication information of CSI/IM includes, but not limited to, group information of CSI/IM and subframe information of CSI/IM.

Here, the group information of CSI/IM is configured to indicate a CSI measurement/reporting subframe set to which a measurement result obtained by CSI/IM measurement performed by the UE based on CSI/IM resources belongs, wherein the CSI/IM resources are configured into two groups by high-layer configuration, wherein one group corresponds to CSI measurement/reporting subframe set 1, and the other group corresponds to CSI measurement/reporting subframe set 1 or 2.

Here, the subframe information of CSI/IM is configured to indicate the subframe having CSI/IM resources based on which the UE performs CSI/IM measurement, wherein the CSI/IM resources are configured in N groups by high-layer configuration, wherein one group corresponds to CSI measurement/reporting subframe set 1, and the remaining N-1 groups correspond to CSI measurement/reporting subframe set 2.

Here, a search space candidate of the DCI format bearing the uplink and downlink configuration information includes: a common search space and/or a UE group common search space.

Preferably, the UE group common search space is a search space determined according to a common RNTI of a UE group, or a search space configured for the UE group by high-layer signalling, or a predefined UE group search space.

Here, a search space candidate of the UE-specific DCI format includes: a common search space, and/or a UE group common search space, and/or a UE-specific search space.

Preferably, the step that the UE performs PDCCH blind detection in the search space candidate includes that: the UE detects the DCI format bearing the uplink and downlink configuration information and a UE-specific DCI format X in the UE group common search space, wherein the DCI format bearing the uplink and downlink configuration information has a same size as the UE-specific DCI format X.

Preferably, the step that the UE performs PDCCH blind detection in the search space candidate includes that: the UE detects a UE-specific DCI format Y in the UE-specific search space of the subframe candidate, wherein the UE-specific DCI format Y has a size different from the DCI format bearing the uplink and downlink configuration information.

Preferably, the step that the UE performs PDCCH blind detection in the search space candidate includes that: in a carrier aggregation scenario, when cross-carrier scheduling is not configured for each serving cell,

the UE detects the DCI format bearing the uplink and downlink configuration information in a common search space and a UE group common search space of a first primary serving cell Pcell-X and a UE group common search space of a secondary serving cell Scell;

or, the UE detects the DCI format bearing the uplink and downlink configuration information in a common search space and a UE group common search space of a Pcell-X;

or, the UE detects the DCI format bearing the uplink and downlink configuration information in a common search space and a UE group common search space of a Pcell-X, a common search space and a UE group common search space of a second primary serving cell Pcell-Y and a UE group common search space of a Scell;

or, the UE detects the DCI format bearing the uplink and downlink configuration information in a common search space and a UE group common search space of a Pcell-X, and a common search space and a UE group common search space of a Pcell-Y.

Preferably, when the UE does not detect the DCI format bearing the uplink and downlink configuration information on the subframe candidate, during periodic CSI reporting of the UE, the UE determines a time-domain reference resource corresponding to periodic CSI reporting according to predefined uplink and downlink configuration information, wherein the predefined uplink and downlink configuration information includes uplink and downlink configuration information indicated in SIB-1, or effective uplink and downlink configuration information which is received last time, or uplink reference configuration information configured by a high layer;

Preferably, when the UE does not detect the DCI format bearing the uplink and downlink configuration information on the subframe candidate, the UE does not send periodic CSI on a subframe where periodic CSI reporting is needed, or sends a CSI report which is out of range.

Preferably, when the UE does not detect the DCI format bearing the uplink and downlink configuration information on the subframe candidate, if the UE is required to perform CSI reporting in subframe n, then when subframe n-4 is a fixed downlink subframe, the UE sends a CSI report obtained by measurement at subframe n-4.

In order to make a purpose, technical solutions and advantages of the disclosure clearer, the technical solutions of the disclosure will be further described below with reference to the drawings in detail. It is important to note that embodiments of the disclosure and characteristics in the embodiments may be freely combined under the condition of no conflicts.

Embodiment 1

The embodiment is described from the aspect of a base station side.

For UE with a dynamic uplink and downlink configuration regulation function, a base station configures a specific RNTI, recorded as a TDD-RNTI, through high-layer signalling, and the configured TDD-RNTI is different from all existing RNTIs configured for the UE, wherein the base station may configure the same TDD-RNTI for a group of UE, thereby forming a UE group, and the UE group has the same uplink and downlink configuration.

The base station configures a sending period and a sending subframe of a DCI format bearing uplink and downlink configuration information through high-layer signalling; or, the sending subframe is one or multiple subframes agreed on by the sending party and the receiving party; in the embodiment, as shown in Fig. 3, it is supposed that the sending period is 40ms and the sending subframe is subframe 0 or subframe 5; and the sending period and the sending subframe are configured by a high layer, or are agreed on by the base station and the UE.

Under such a configuration, the base station may send the DCI format bearing the uplink and downlink configuration information on subframe 0 or subframe 5 of a radio frame with a System Frame Number (SFN) satisfying SFN mod 4=0, and whether the DCI format is sent on subframe 0 or subframe 5 is specifically determined by scheduling of the base station. As shown in Fig. 3, the base station may select subframe 0 from a first radio frame in the first 40ms to send the DCI format bearing the uplink and downlink configuration information, and select subframe 5 from a first radio frame in the second 40ms to send the DCI format bearing the uplink and downlink configuration information.

Here, the base station may determine whether to send the DCI format bearing the uplink and downlink configuration information in a common search space or in a UE group common search space according to a scheduling condition of a current subframe:

when the DCI format is sent in the common search space, the number of bits in the DCI format bearing the uplink and downlink configuration information (i.e. a size of the DCI format) is the same as that of one of other DCI formats sent in the common search space, and specifically, is the same as that of DCI format 1C or 1A; and
when the DCI format is sent in the UE group common search space, the size of the DCI format bearing the uplink and downlink configuration information is the same as that of a UE-specific DCI format X, and specifically, is the same as the size of DCI format 1A.

In consideration of the fact that the DCI format bearing the uplink and downlink configuration information may be sent in the common search space or may also be sent in the UE group common search space and in order to ensure that analyses over the DCI format are consistent, the size of the DCI format bearing the uplink and downlink configuration information is preferably the same as the size of DCI format 1A.

The UE group common search space is a search space determined according to the TDD-RNTI, or a search space configured for the UE group by high-layer signalling, or a predefined UE group search space, and the DCI format bearing the uplink and downlink configuration information is scrambled by the TDD-RNTI.

When the base station sends a UE-specific DCI format in the UE group common search space, the UE-specific DCI format is the DCI format X, the size of the UE-specific DCI format X is the same as the size of the DCI format bearing the uplink and downlink configuration information, and the UE-specific DCI format is scrambled by an RNTI of the UE so as to be distinguished from the DCI format bearing the uplink and downlink configuration information.

When the base station sends a UE-specific DCI format in the UE-specific search space of an old release, the UE-specific DCI format is a DCI format Y, and the size of the UE-specific DCI format Y is different from the size of the DCI format bearing the uplink and downlink configuration information.

From the embodiment, it can be seen that the DCI format bearing the uplink and downlink configuration information may be sent in the common search space, or may also be sent in the UE group common search space, and the base station may flexibly select the search space of the DCI format bearing the uplink and downlink configuration information with reference to a practical scheduling condition, so that influence on the existing DCI format is reduced.

Moreover, as mentioned before, the size of the DCI format bearing the uplink and downlink configuration information is the same as the size of one (i.e. DCI format 1A) of the DCI formats sent in the common search space, is also the same as that of the DCI format sent in the UE group common search space, and is different from the size of the DCI format sent in the UE-specific search space, so that the number of times of required DCI format blind detection is the same as that of conventional UE (shown in embodiment 4 described hereinafter) during detection of the UE. The DCI formats with the same size are distinguished by scrambling with different RNTIs, for example: for different DCI formats sent in the common search space, a common DCI format of a cell is scrambled through a System Information (SI)/Random Access (RA)/Paging-RNTI, while a DCI format bearing uplink and downlink configuration information is scrambled through a TDD-RNTI; and for different DCI formats sent in the UE group common search space, a UE-specific DCI format is scrambled through an RNTI of UE, such as a Cell-RNTI (C-RNTI), while a DCI format bearing uplink and downlink configuration information is scrambled through a TDD-RNTI. Here, one purpose of setting DCI format bearing the uplink and downlink configuration information is not increasing the number of times of blind detection of the UE .

Embodiment 2

In a carrier aggregation system, if cross-carrier scheduling is not configured for each serving cell, a search space configured for a base station to send a DCI format bearing uplink and downlink configuration information includes:

a common search space and a UE group common search space of a first primary serving cell Pcell-X and a UE group common search space of a secondary serving cell Scell; or,
a common search space and a UE group common search space of a Pcell-X; or,
a common search space and a UE group common search space of a Pcell-X, a common search space and a UE group common search space of a second primary serving cell Pcell-Y and a UE group common search space of a Scell; or,
a common search space and a UE group common search space of a Pcell-X and a common search space and a UE group common search space of a Pcell-Y.

Embodiment 3

In a system supporting dynamic regulation of uplink and downlink configuration, a transmission direction of a subframe may be dynamically changed, so that interferences from UE on different subframes are different. In current discussion, in order to measure interferences on different subframes, CSI measurement and reporting of at most 2 subframe sets is supported, wherein CSI measurement and reporting may be implemented by measurement according to configured CSI resources, or may also be implemented by measurement based on IMRs.

Specific embodiment 3-1

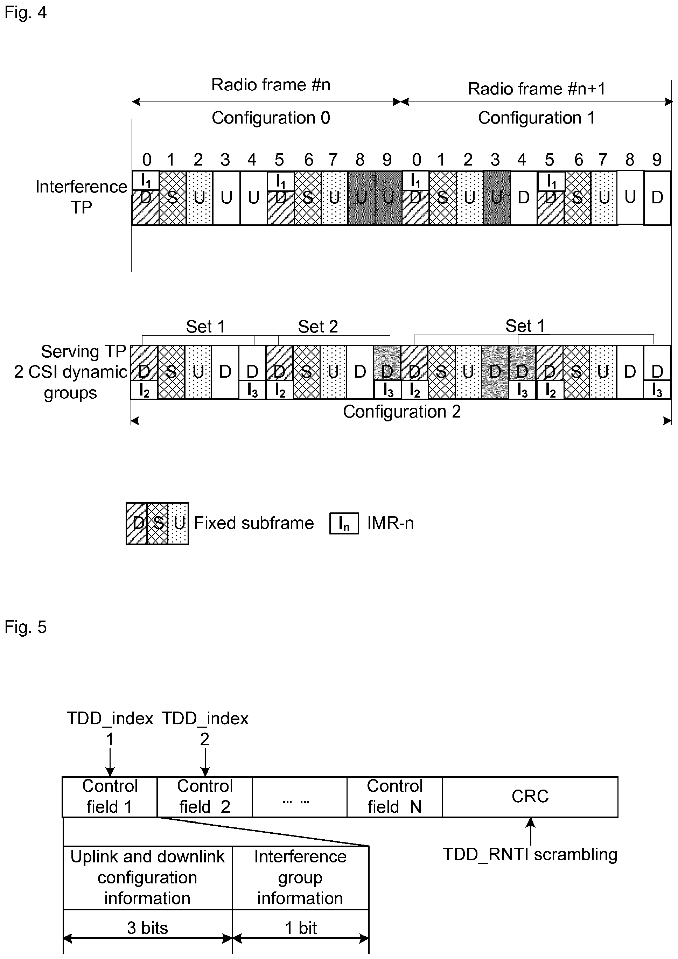

As shown in Fig. 4, a base station configures two IMRs for UE, wherein IMR-2 corresponds to a fixed subframe, interference measured based on IMR-2 is downlink interference, IMR-3 corresponds to a flexible subframe, and interference measured based on IMR-3 may be uplink interference (when a subframe corresponding to an interference Transmission Point (TP) on IMR-3 is an uplink subframe), or may also be downlink interference (when the subframe corresponding to the interference TP on IMR-3 is a downlink subframe). In Fig. 4, when TDD uplink and downlink configuration of the interference TP is changed from configuration 0 to configuration 1 and TDD uplink and downlink configuration of a serving TP is kept unchanged, interference measured based on IMR-3 is uplink interference on radio frame #n, and is downlink interference on radio frame #n+1. If the UE does not know whether the interference measured based on IMR-3 is uplink interference or downlink interference, the interference measured based on IMR-3 may not be reasonably grouped, so that the UE may not accurately perform CSI reporting.

In the embodiment, a DCI format bearing uplink and downlink configuration information includes a plurality of control fields, wherein at least one control field includes the uplink and downlink configuration information; and preferably, the control field including the uplink and downlink configuration information further includes grouping information of IM, wherein the grouping information of IM is configured to indicate the UE whether the interference measured by IM based on IMR is uplink interference or downlink interference, as shown in Fig. 5.

Specifically, each control field indicates uplink and downlink configuration and grouping information of IM; and specifically, the uplink and downlink configuration information has at most 3 bits configured to indicate 7 types of existing TDD uplink and downlink configuration, and the grouping information of IM has 1 bit configured to indicate a CSI measurement/reporting subframe set to which the interference measured on the flexible subframe belongs to the UE.

For example, when the DCI format bearing the uplink and downlink configuration information is sent on radio frame #n, control sub-domain "uplink and downlink configuration" indicates the uplink and downlink configuration information, such as configuration #2, of the serving TP, and control sub-domain "interference group information" indicates that the interference measured based on the IMR on the flexible subframe belongs to CSI measurement/reporting subframe set 2; and when the DCI format bearing the uplink and downlink configuration information is sent on radio frame #n+1, control sub-domain "uplink and downlink configuration" indicates the uplink and downlink configuration information, such as configuration #2, of the serving TP, and control sub-domain "interference group information" indicates that the interference measured based on the IMR on the flexible subframe belongs to CSI measurement/reporting subframe set 2. According to the indicated information, the UE may accurately group the interferences measured based on the IMRs, thereby implementing accurate CSI reporting. As shown in Fig. 4, on radio frame #n, an interference result measured based on IMR-2 belongs to CSI measurement/reporting subframe set 1 and an interference result measured based on IMR-3 belongs to CSI measurement/reporting subframe set 2, and on radio frame #n+1, the interference results measured based on IMR-2 and IMR-3 both belong to CSI measurement/reporting subframe set 1, wherein CSI measurement/reporting subframe set 1 corresponds to the interference to the fixed subframe (interference of downlink to downlink), and CSI measurement/reporting subframe set 2 corresponds to the interference to the flexible subframe (interference of uplink to uplink).

In the abovementioned embodiment, the base station configures only one IMR on the flexible subframe, so that group information of the IMR has only 1 bit; and similarly, if N IMRs are configured at the flexible subframe, group information of the IMRs correspondingly has N bits to indicate CSI measurement/reporting subframe sets to which the N IMRs belong respectively.

Specific embodiment 3-2

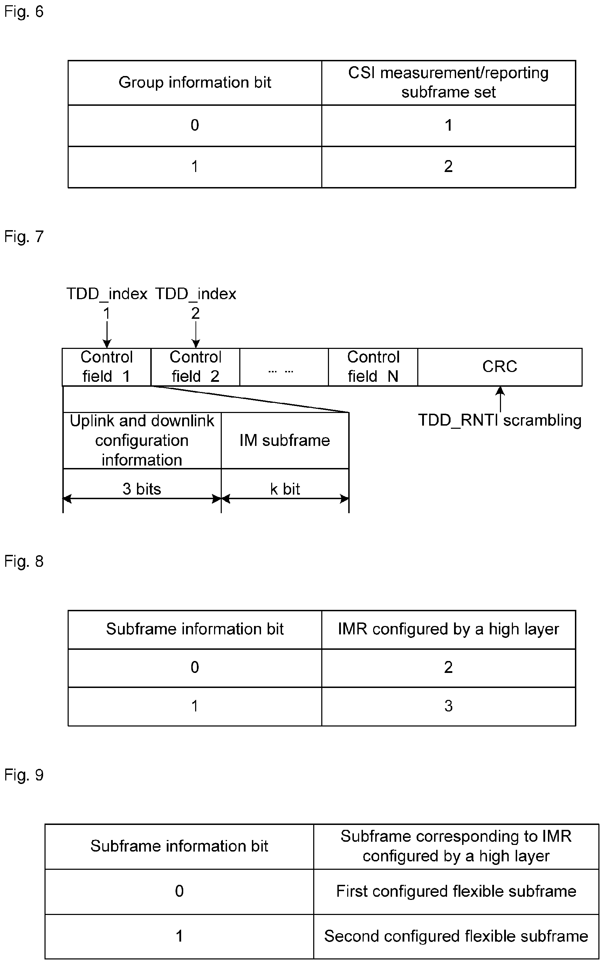

On the premise that at most 2 CSI measurement/reporting subframe sets are supported, the following manner may also be adopted for configuration of IMRs: it is configured that one/one group of IMRs corresponds to CSI measurement/reporting subframe set 1 and other (N-1)/(N-1)groups of IMRs correspond to CSI measurement/reporting subframe set 2, as shown in Fig. 6. Specifically, CSI measurement/reporting subframe set 1 corresponds to a fixed subframe, and CSI measurement/reporting subframe set 2 corresponds to a flexible subframe, wherein the IMRs corresponding to the flexible subframe may be configured by a high layer to correspond to one or multiple flexible subframes, such as one or multiple of subframes {3,4,7,8,9}. The base station indicates the IMR/IMR group on which the UE is about to perform IM, or indicates the flexible subframe on which the UE is about to perform IM through dynamic signalling.

In the embodiment, a DCI format bearing uplink and downlink configuration information includes a plurality of control fields, wherein at least one control field includes the uplink and downlink configuration information; and preferably, the control field including the uplink and downlink configuration information further includes subframe information of IM, wherein the subframe information of IM is configured to indicate the IMR/IMR group on which the UE performs IM, or indicate the flexible subframe on which the UE is about to perform IM, as shown in Fig. 7.

Specifically, each control field indicates uplink and downlink configuration and subframe information of IM; and

specifically, the uplink and downlink configuration information has at most 3 bits configured to indicate 7 types of existing TDD uplink and downlink configuration, the subframe information of IM has k bits, and a magnitude of k depends on the IMRs configured by the high layer. Specifically:

manner 1: two IMRs corresponding to the flexible subframe are configured, wherein the two IMRs correspond to one or multiple flexible subframes; the subframe information of IM has only 1 bit configured to indicate the configured IMR corresponding to the flexible subframe on which the UE performs IM; and

manner 2: one IMR corresponding to the flexible subframe is configured, wherein the IMR corresponds to one or multiple flexible subframes; the subframe information of IM has $k = \lceil \log_2 K \rceil$ bits, wherein K is the number of the flexible subframes corresponding to the IMR. Preferably, when the number of the flexible subframes corresponding to the configured IMR is only 2, the subframe information has only 1 bit, and when the number of the flexible subframes corresponding to the configured IMR is at most 4, the subframe information has 2 bits. Considering that the number of the flexible subframes is at most 5, the subframe information has at most 3 bits. In order to ensure that the DCI format bearing the uplink and downlink configuration information is fixed, the number of bits in dynamic indication information of IM is needed to be fixed. For fixing the number of the bits in the dynamic indication information of IM, one method is to fix the number to be 3 bits, and then there is no requirement on the number of the flexible subframes corresponding to the IMR configured by the high layer, or the high layer may directly indicate the subframe on which the UE performs IM through dynamic signalling without configuring the flexible subframes corresponding to the IMR. The other method is to specify the number of the flexible subframes corresponding to the IMR configured by the high layer to fixedly be, for example, 2 or 4, and then the subframe information of IM fixedly has 1 bit or 2 bits. Here, signalling indication overhead and flexibility of IM should be compromised.

For manner 1, for example, the high layer configures 3 IMRs (a current protocol supports at most 3 IMRs), wherein subframes corresponding to IMR1 are {0,5} (i.e. fixed subframes), subframes corresponding to IMR2 are {3,8}, and subframes corresponding to IMR3 are {4,9}; and then IMR1 corresponds to CSI measurement/reporting subframe set 1, and IMR2 and IMR3 both correspond to CSI measurement/reporting subframe set 2. The base station indicates through dynamic signalling whether an IM result corresponding to CSI measurement/reporting subframe set 2 is obtained based on IMR2 or IMR3. Specifically as shown in Fig. 8, when a bit in subframe information received by the UE is "0", the UE performs IM at the flexible subframes corresponding to IMR2, and namely performs IM at subframes {3,8}, and an obtained result belongs to CSI measurement/reporting subframe set 2; and when the bit in the subframe information received by the UE is "1", the UE performs IM at the flexible subframes corresponding to IMR3, and namely performs IM at subframes {4,9}, and an obtained result belongs to CSI measurement/reporting subframe set 2. It is to be noted that a mapping relationship between the bit in the subframe information and the IMRs configured by the high layer in the embodiment is just specified to facilitate description, and is practically not limited.

For manner 2, the high layer configures 2 IMRs, wherein subframes corresponding to IMR1 are {0,5} and subframes corresponding to IMR2 are {3,4}; and then IMR1 corresponds to CSI measurement/reporting subframe set 1, and IMR2 corresponds to CSI measurement/reporting subframe set 2. The base station indicates through dynamic signalling whether an IM result corresponding to CSI measurement/reporting subframe set 2 is obtained based on subframe 3 or subframe 4. Specifically as shown in Fig. 9, when a bit in subframe information received by the UE is "0", the UE performs IM at the first flexible subframe, i.e. subframe 3, corresponding to IMR2, and an obtained result belongs to CSI measurement/reporting subframe set 2; and when the bit in the subframe information received by the UE is "1", the UE performs IM at the second flexible subframe, i.e. flexible subframe 4, corresponding to IMR2, and an obtained result belongs to CSI measurement/reporting subframe set 2.

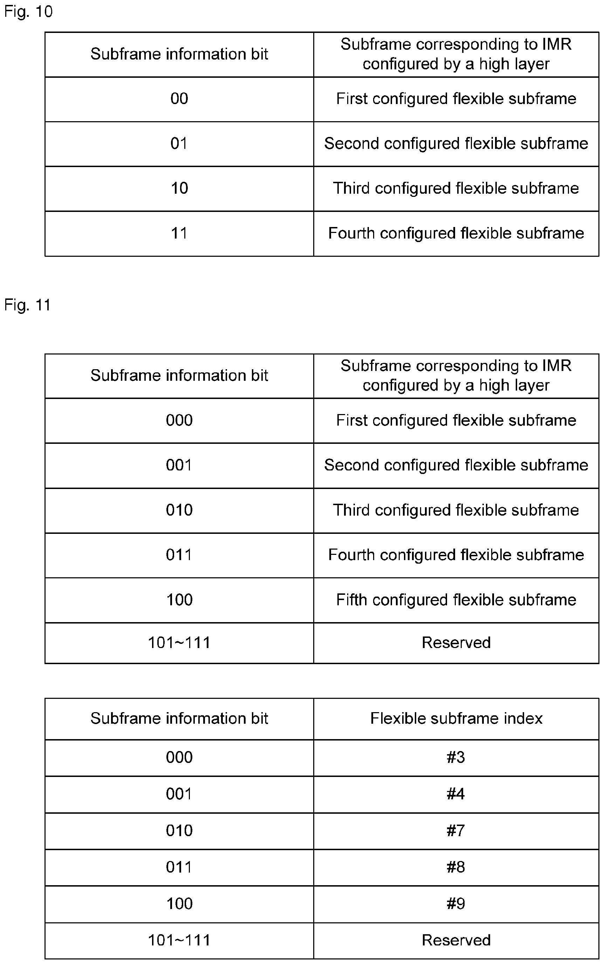

For manner 2, the high layer configures 2 IMRs, wherein subframes corresponding to IMR1 are {0,5} and subframes corresponding to IMR2 are {3,4,8,9}; and then IMR1 corresponds to CSI measurement/reporting subframe set 1, and IMR2 corresponds to CSI measurement/reporting subframe set 2. The base station indicates through dynamic signalling whether an IM result corresponding to CSI measurement/reporting subframe set 2 is obtained based on subframe 3 or 4 or 8 or 9. Since there are 4 candidate flexible subframes, subframe information has 2 bits. As shown in Fig. 10, when the bits in the subframe information received by the UE are "00", the UE performs IM at the first flexible subframe, i.e. subframe 3, corresponding to IMR2, and an obtained result belongs to CSI measurement/reporting subframe set 2; when the bits in the subframe information received by the UE are "01", the UE performs IM at the second flexible subframe, i.e. flexible subframe 4, corresponding to IMR2, and an obtained result belongs to CSI measurement/reporting subframe set 2; when the bits in the subframe information received by the UE are "10", the UE performs IM at the third flexible subframe, i.e. flexible subframe 8, corresponding to IMR2, and an obtained result belongs to CSI measurement/reporting subframe set 2; and when the bits in the subframe information received by the UE are "11", the UE performs IM at the fourth flexible subframe, i.e. flexible subframe 9, corresponding to IMR2, and an obtained result belongs to CSI measurement/reporting subframe set 2.

For manner 2, the high layer configures 2 IMRs, wherein subframes corresponding to IMR1 are {0,5} and subframes corresponding to IMR2 are {3,4,7,8,9}; and then IMR1 corresponds to CSI measurement/reporting subframe set 1, and IMR2 corresponds to CSI measurement/reporting subframe set 2. The base station indicates through dynamic signalling whether an IM result corresponding to CSI measurement/reporting subframe set 2 is obtained based on subframe 3 or 4 or 7 or 8 or 9. Since there are 5 candidate flexible subframes, subframe information has 3 bits. As shown in Fig. 10, when the bits in the subframe information received by the UE are "000", the UE performs IM at the first flexible subframe, i.e. subframe 3, corresponding to IMR2, and an obtained result belongs to CSI measurement/reporting subframe set 2; when the bits in the subframe information received by the UE are "001", the UE performs IM at the second flexible subframe, i.e. flexible subframe 4, corresponding to IMR2, and an obtained result belongs to CSI measurement/reporting subframe set 2; when the bits in the subframe information received by the UE are "010", the UE performs IM at the third flexible subframe, i.e. flexible subframe 7, corresponding to IMR2, and an obtained result belongs to CSI measurement/reporting subframe set 2; when the bits in the subframe information received by the UE are "011", the UE performs IM at the fourth flexible subframe, i.e. flexible subframe 8, corresponding to IMR2, and an obtained result belongs to CSI measurement/reporting subframe set 2; and when the bits in the subframe information received by the UE are "100", the UE performs IM at the fifth flexible subframe, i.e. flexible subframe 9, corresponding to IMR2, and an obtained result belongs to CSI measurement/reporting subframe set 2.

For manner 2, the high layer configures 2 IMRs, wherein subframes corresponding to IMR1 are {0,5} and IMR2 corresponds to flexible subframes; and then IMR1 corresponds to CSI measurement/reporting subframe set 1, and IMR2 corresponds to CSI measurement/reporting subframe set 2. The base station indicates, through dynamic signalling, the flexible subframe based on which an IM result corresponding to CSI measurement/reporting subframe set 2 is obtained. Since there are at most 5 candidate flexible subframes, subframe information has 3 bits. As shown in Fig. 11, when the bits in the subframe information received by the UE are "000", the UE performs IM at subframe 3, and an obtained result belongs to CSI measurement/reporting subframe set 2; when the bits in the subframe information received by the UE are "001", the UE performs IM at subframe 4, and an obtained result belongs to CSI measurement/reporting subframe set 2; when the bits in the subframe information received by the UE are "010", the UE performs IM at subframe 7, and an obtained result belongs to CSI measurement/reporting subframe set 2; when the bits in the subframe information received by the UE are "011", the UE performs IM at subframe 8, and an obtained result belongs to CSI measurement/reporting subframe set 2; and when the bits in the subframe information received by the UE are "100", the UE performs IM at subframe 9, and an obtained result belongs to CSI measurement/reporting subframe set 2.

The abovementioned embodiment lists the IMR-based examples, and is also applicable to CSI-resource-based measurement.

Embodiment 4

A base station may include dynamic indication information of CSI/IM into a DCI format bearing uplink and downlink configuration information or into a UE-specific DCI format. When the base station carries the dynamic indication information of CSI/IM in the DCI format bearing the uplink and downlink configuration information, the dynamic indication information of CSI/IM and the uplink and downlink configuration information are sent in a manner described in embodiment 3; and when the base station carries the dynamic indication information of CSI/IM in the UE-specific DCI format, the UE-specific DCI format is added with a dynamic indication control field for IM, and only a specific DCI of UE with a dynamic uplink and downlink configuration regulation function may have the control field.

Embodiment 5

Embodiment 5, which is not part of the present invention but is present for illustration purposes only, is described from the aspect of a UE side.

When UE performs PDCCH detection to acquire uplink and downlink configuration information, the UE performs PDCCH blind detection in a search space candidate of a subframe candidate, and acquires a DCI format, and the UE extracts the uplink and downlink configuration information according to a position of the uplink and downlink configuration information in the DCI format, wherein information about the position of the uplink and downlink configuration information in the DCI format is determined through high-layer signalling.

The subframe candidate is a subframe which is determined by the UE according to a related parameter, such as a sending period and a sending subframe, configured by a high layer or agreed on between the UE and a base station, and is possibly configured to transmit the DCI format bearing the uplink and downlink configuration information; in the embodiment, it is supposed that the sending period configured by the high layer is 40ms and the sending subframe is subframe 0 or subframe 5; and under such a configuration, the subframe candidate includes subframe 0 and subframe 5 of a radio frame with an SFN satisfying SFN mod 4=0, and the UE detects the DCI format bearing the uplink and downlink configuration information on the subframe candidate.

The search space candidate includes a common search space and a UE group common search space, wherein the UE group common search space is a search space determined according to a common RNTI of a UE group, or a search space configured for the UE group by high-layer signalling, or a predefined UE group search space.

When the UE performs DCI format detection in the common search space, the UE performs DCI format blind detection, and acquires a decoded DCI format including a CRC according to a possible size of a DCI format sent in the common search space, then performs CRC descrambling and CRC according to a TDD-RNTI, and further extracts the uplink and downlink configuration information according to the position of the uplink and downlink configuration information in the DCI format if CRC succeeds, wherein the DCI format sent in the common search space includes: DCI format 1C and DCI format 1A/3/3A.

When the UE performs DCI format detection in the UE group common search space, the UE performs DCI format blind detection, and acquires a decoded DCI format including a CRC according to a possible size of a DCI format sent in the UE group common search space, then performs CRC descrambling and CRC according to an RNTI which may be adopted for scrambling the DCI format sent in the UE group common search space, and further extracts the uplink and downlink configuration information according to the position of the uplink and downlink configuration information in the DCI format if CRC succeeds after descrambling with the TDD-RNTI, and if the dynamic indication information of CSI/IM is contained in the DCI format, the UE simultaneously extracts the dynamic indication information of CSI/IM; and if CRC succeeds after descrambling with an RNTI of the UE, a UE-specific DCI format is detected, and if the dynamic indication information of CSI/IM is born in the UE-specific DCI format, the UE simultaneously extracts the dynamic indication information of CSI/IM, wherein the DCI format which is sent in the UE group common search space and bears the uplink and downlink configuration information and a UE-specific DCI format X have the same size, which is, for example, the size of DCI format 1A.

When the UE performs DCI format detection in a specific search space of the subframe candidate, the UE performs DCI format blind detection, and acquires a decoded DCI format including a CRC according to a possible size of a DCI format sent in a UE-specific search space, then performs CRC descrambling and CRC according to the RNTI of the UE, and detects the UE-specific DCI format if CRC succeeds, and if the dynamic indication information of CSI/IM is born in the UE-specific DCI format, the UE simultaneously extracts the dynamic indication information of CSI/IM, wherein the size of the DCI format Y sent in the UE-specific search space is different from the size of the DCI format sent in the UE group common search space.

UE of an old release performs blind detection in the common search space and the UE-specific search space respectively when performing DCI format blind detection, wherein sizes of two DCI format candidates may be detected at different candidate positions according to different aggregation levels in the common search space, and since there are totally 6 candidate positions according to a specification made in an existing protocol, the UE is required to perform blind detection for 12 (6*2=12) times in the common search space; and similarly, sizes of two candidate DCI formats may also be detected at different candidate positions according to different aggregation levels in the UE-specific search space, and since there are totally 16 candidate positions according to a specification made in the existing protocol, the UE is required to perform blind detection for 32 (16*2=32) times in the UE-specific search space.

After the embodiment of the disclosure is adopted, when the UE performs DCI format blind detection, there are still two sizes of candidate DCI formats in the common search space, and position candidates are the same as those specified in the existing protocol, so that the UE is still needed to perform blind detection for 12 times in the common search space; there is only one size of DCI format candidates in the UE group common search space, as mentioned above, the DCI formats sent in the UE group common search space have the same size, and position candidates are the same as those specified for the UE-specific search space in the existing protocol, so that the UE performs blind detection for 16 times in the UE group common search space; and there is also 1 DCI format candidate, i.e. DCI format Y (wherein DCI format Y is related to a transmission mode) in the UE-specific search space, and candidate positions are the same as those specified in the existing protocol, so that the UE performs blind detection also for 16 times in the UE-specific search space. Therefore, the number of times of blind detection required to be performed by the UE is the same as that of the conventional UE.

Embodiment 6

In embodiment 6, which is not part of the present invention but is present for illustration purposes only, in a carrier aggregation system, when there is no cross-carrier scheduling configured, a search space for UE to detect a DCI format bearing uplink and downlink configuration information includes:

a common search space and a UE group common search space of a first primary serving cell Pcell-X and a UE group common search space of a secondary serving cell Scell; or,
a common search space and a UE group common search space of a Pcell-X; or,
a common search space and a UE group common search space of a Pcell-X, a common search space and a UE group common search space of a second primary serving cell Pcell-Y and a UE group common search space of a Scell; or,
a common search space and a UE group common search space of a Pcell-X and a common search space and a UE group common search space of a Pcell-Y.

Embodiment 7

In embodiment 7, which is not part of the present invention but is present for illustration purposes only, when UE does not detect a DCI format bearing uplink and downlink configuration information on a subframe candidate, during periodic CSI reporting, the UE may adopt at least one of the following manners.

Manner 1: the UE determines a time-domain reference resource corresponding to periodic CSI reporting according to predefined uplink and downlink configuration information, wherein the predefined uplink and downlink configuration information includes: uplink and downlink configuration information indicated in SIB-1, or effective uplink and downlink configuration information which is received last time, or uplink reference configuration information configured by a high layer. For UE supporting dynamic regulation of an uplink and downlink configuration, a base station further configures, except the uplink and downlink configuration indicated in SIB-1, a downlink reference configuration and an uplink reference configuration for the UE to determine a timing relationship of an HARQ and a timing relationship of uplink scheduling/uplink HARQ respectively.

Manner 2: periodic CSI is not sent, or a CSI report out of range is sent.

Manner 3: if the UE is needed to perform CSI reporting in subframe n, then when subframe n-4 is a fixed downlink subframe, the UE reports a CSI report obtained by measurement on subframe n-4.

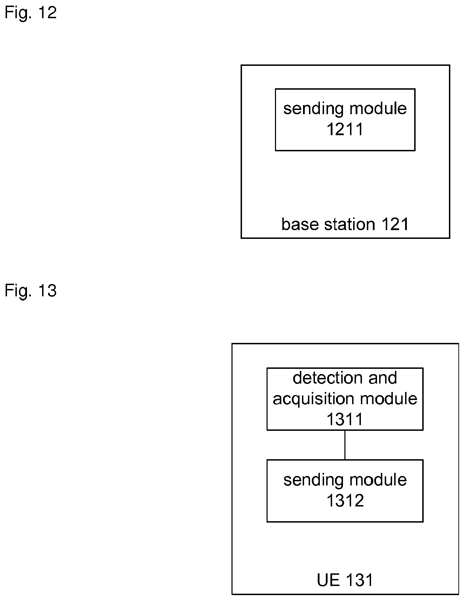

An embodiment of the disclosure further provides a base station. As shown in Fig. 12, the base station 121 includes a sending module 1211, configured to transmit a DCI format to UE, the DCI format bearing uplink and downlink configuration information configured to indicate an uplink and downlink configuration, and further configured to send the DCI format bearing the uplink and downlink configuration information through a PDCCH, and send a search space of the PDCCH, where the search space of the PDCCH includes a common search space and/or a UE group common search space.

The sending module 1211 is further configured to configure a sending period and a sending subframe of the DCI format bearing the uplink and downlink configuration information through high-layer signalling; or, configured to agree on the sending period and the sending subframe with an opposite party at the base station, wherein there is one or multiple sending subframes.

Preferably, when the base station 121 sends a UE-specific DCI format on the subframe where the DCI format bearing the uplink and downlink configuration information is sent,
the sending module 1211 is configured to send the UE-specific DCI format, where a search space of the sent UE-specific DCI format includes a common search space, and/or a UE group common search space, and/or a UE-specific search space.

Here, the DCI format includes a plurality of control fields, wherein at least one control field includes the uplink and downlink configuration information.

Correspondingly, the sending module 1211 may determine a position of the uplink and downlink configuration information in the DCI format according to a mapping relationship associated with a configuration parameter related to IM, wherein the position of the uplink and downlink configuration information in the DCI format refers to an index value of the control field in the DCI format.

It is to be noted that the sending module 1211 may be implemented by a Central Processing Unit (CPU), a Micro Processing Unit (MPU), a Digital Signal Processor (DSP) or a Field Programmable Gate Array (FPGA) of the base station in combination with a communication function chip of the base station.

An embodiment of the disclosure, which is not part of the present invention but is present for illustration purposes only, further provides UE. As shown in Fig. 13, the UE 131 includes a detection and acquisition module 1311, configured to perform PDCCH blind detection in a search space candidate of a subframe candidate and acquire a DCI format, wherein the subframe candidate is configured to transmit a DCI format bearing uplink and downlink configuration information.

Here, the detection and acquisition module 1311 is further configured to acquire dynamic indication information of CSI/IM from the DCI format.

Preferably, the detection and acquisition module 1311 may determine a position of the uplink and downlink configuration information in the DCI format according to a mapping relationship associated with a configuration parameter related to IM, wherein the position of the uplink and downlink configuration information in the DCI format refers to an index value of a control field in the DCI format.

Preferably, the UE 131 further includes a sending module 1312, and when the UE 131 does not detect the DCI format bearing the uplink and downlink configuration information on the subframe candidate,

> the sending module 1312 is configured to determine a time-domain reference resource corresponding to periodic CSI reporting according to predefined uplink and downlink configuration information, wherein the predefined uplink and downlink configuration information includes uplink and downlink configuration information indicated in SIB-1, or effective uplink and downlink configuration information which is received last time, or uplink reference configuration information configured by a high layer;
> or,
> the sending module 1312 is configured to not send periodic CSI, or send a CSI report which is out of range;
> or,
> if the UE is required to perform CSI reporting in subframe n, then when subframe n-4 is a fixed downlink subframe, the sending module 1312 is configured to report a CSI report obtained by measurement at subframe n-4.

It is to be noted that the detection and acquisition module 1311 may be implemented by a CPU, MPU, DSP or FPGA of the UE, and the sending module 1312 may be implemented by a communication function chip of the UE.

According to the methods for notification and acquisition of uplink and downlink configuration information, base station and UE provided by the embodiments of the disclosure, a DCI format is adopted to carry uplink and downlink configuration information configured to indicate uplink and downlink configuration, so that a terminal can be rapidly notified of uplink and downlink configuration adopted by a current cell, the base station may also dynamically notify the UE to perform CSI/IM without using an additional physical-layer resource, delay is short, and a fuzzy problem is eliminated. In addition, the embodiments of the disclosure further provide a dynamic indication method for IM, which may support rapid IM and reporting and ensure accuracy of a measurement/reporting result.

In addition, an embodiment of the disclosure further provides a computer-readable storage medium, which includes a set of computer-executable instructions, the instructions being configured to execute the method for notifying uplink and downlink configuration information on a base station side in the embodiment of the disclosure.

An embodiment of the disclosure, which is not part of the present invention but is present for illustration purposes only, further provides a computer-readable storage medium, which includes a set of computer-executable instructions, the instructions being configured to execute the method for acquisition of uplink and downlink configuration information on a UE side in the embodiment of the disclosure.

Those skilled in the art should know that the embodiments of the disclosure may be provided as a method, a system or a computer program product. Therefore, the disclosure may adopt a hardware embodiment, software embodiment and combined software and hardware embodiment. Moreover, the disclosure may adopt a computer program product implemented on one or multiple computer-available storage media (including, but not limited to, a disk memory, an optical memory and the like) including computer-available program codes.

The disclosure is described with reference to flowcharts and/or block diagrams of the method, equipment (system) and computer program product according to the embodiment of the disclosure. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto the computer or the other programmable data processing equipment, so that a series of operating steps are executed on the computer or the other programmable data processing equipment to generate processing implemented by the computer, and steps for realizing the function specified in one flow or many flows in the flowcharts and/or one block or many blocks in the block diagrams are provided by the instructions executed on the computer or the other programmable data processing equipment.

The above is only the preferred embodiment of the disclosure and not intended to limit the scope of protection of the disclosure.

## Claims

**1.** A method for notifying uplink and downlink configuration information, comprising:

sending to User Equipment, UE, by a base station, a Downlink Control Information, DCI, format through a Physical Downlink Control Channel, PDCCH, in a search space, wherein the search space comprises a common search space and/or a UE group common search space and the DCI format bears uplink and downlink configuration information configured to indicate uplink and downlink configuration,

**characterized in that**, the DCI format comprises a plurality of control fields, wherein at least one control field comprises the uplink and downlink configuration information,

wherein when the base station sends a UE-specific DCI format on a subframe where the DCI format bearing the uplink and downlink configuration information is not sent, the base station carries dynamic indication information of Channel State Information, CSI,/Interference Measurement, IM, in the UE-specific DCI format, so that base station dynamically notifies UE to perform dynamic CSI/IM measurement;

wherein the dynamic indication information of CSI/IM comprises group information of CSI/IM and subframe information of CSI/IM.

**2.** The method according to claim 1, wherein

the UE group common search space is a search space determined according to a common Radio Network Temporary Identity, RNTI, of a UE group, or a search space configured for the UE group by high-layer signalling, or a predefined UE group search space; or,

the DCI format bearing the uplink and downlink configuration information has a same number of bits as a UE-specific DCI format X which is a UE-specific DCI format sent in the UE group common search space, or has a same number of bits as one of DCI formats sent in the common search space by the base station, the X being a predefined value.

**3.** The method according to claim 1, further comprising:
configuring, by the base station, a sending period and a sending subframe of the DCI format bearing the uplink and downlink configuration information through high-layer signalling; or, agreeing on the sending period and the sending subframe by a sending party and a receiving party, wherein there is one or multiple sending subframes.

**4.** The method according to claim 3, wherein when there are multiple sending subframes, sending, by the base station, the DCI format comprises:
selecting, by the base station, one of the multiple sending subframes for sending the DCI format when the base station sends the DCI format on a first radio frame of the sending period.

**5.** The method according to claim 1, wherein when the UE-specific DCI format is sent in the UE group common search space, the UE-specific DCI format is a DCI format X, wherein the UE-specific DCI format X has a same number of bits as the DCI format bearing the uplink and downlink configuration information; or when the UE-specific DCI format is sent in the UE-specific search space, the UE-specific DCI format is a DCI format Y, and the UE-specific DCI format Y has a different number of bits from the DCI format bearing the uplink and downlink configuration information; wherein
the DCI format bearing the uplink and downlink configuration information is scrambled through a RNTI of a UE group, and the UE-specific DCI format is scrambled through an RNTI of the UE.

**6.** The method according to claim 1,

wherein the group information of CSI/IM is configured to indicate a CSI measurement/reporting subframe set to which a measurement result obtained by CSI/IM measurement performed by the UE based on CSI/IM resources belongs, wherein the CSI/IM resources are configured into two groups by high-layer configuration, wherein one group corresponds to CSI measurement/reporting subframe set 1, and the other group corresponds to CSI measurement/reporting subframe set 1 or 2; and
the subframe information of CSI/IM is configured to indicate a subframe having CSI/IM resources based on which the UE performs CSI/IM measurement, wherein the CSI/IM resources are configured into N groups by high-layer configuration, wherein one group corresponds to CSI measurement/reporting subframe set 1, and the remaining N-1 groups correspond to CSI measurement/reporting subframe set 2.

**7.** The method according to claim 1, wherein transmitting, by the base station, the DCI format to the UE comprises:

in a carrier aggregation system, when cross-carrier scheduling is not configured for each serving cell, sending, by the base station, the DCI format bearing the uplink and downlink configuration information in a common search space and a UE group common search space of a first primary serving cell Pcell-X and a UE group common search space of a secondary serving cell Scell;
or,
sending, by the base station, the DCI format bearing the uplink and downlink configuration information in a common search space and a UE group common search space of a Pcell-X;
or,
sending, by the base station, the DCI format bearing the uplink and downlink configuration information in a common search space and a UE group common search space of a Pcell-X, a common search space and a UE group common search space of a second primary serving cell Pcell-Y and a UE group common search space of a Scell;
or,
sending, by the base station, the DCI format bearing the uplink and downlink configuration information in a common search space and a UE group common search space of a Pcell-X, and a common search space and a UE group common search space of a Pcell-Y.

**8.** A base station, comprising: a sending module (1211), configured to send a Downlink Control Information, DCI, format to User Equipment, UE, through a Physical Downlink Control Channel, PDCCH, in a search space, wherein the search space comprises a common search space and/or a UE group common search space and the DCI format bears uplink and downlink configuration information configured to indicate uplink and downlink configuration,

**characterized in that**, the DCI format comprises a plurality of control fields, wherein at least one control field comprises the uplink and downlink configuration information, wherein when the base station (121) sends a UE-specific DCI format on a subframe where the DCI format bearing the uplink and downlink configuration information is not sent, the base station carries dynamic indication information of CSI/IM in the UE-specific DCI format, so that base station (121) dynamically notifies UE to perform dynamic CSI/IM measurement;
wherein the dynamic indication information of CSI/IM comprises group information of CSI/IM and subframe information of CSI/IM.

**9.** The base station according to claim 8, wherein
the sending module (1211) is further configured to configure a sending period and a sending subframe of the DCI format bearing the uplink and downlink configuration information through high-layer signalling; or, configured to agree with an opposite party at the base station (121) on the sending period and the sending subframe.

**10.** A computer-readable storage medium, comprising a set of computer-executable instructions, the instructions being configured to execute the method for notifying uplink and downlink configuration information according to any one of claims 1 to 7.

## Patentansprüche

**1.** Verfahren zum Mitteilen von Aufwärts- und Abwärtsstrecken-Konfigurationsinformationen, umfassend:

Senden eines Downlink-Kontrollinformationsformats, DCI, über einen physikalischen Downlink-Kontrollkanal, PDCCH, in einem Suchraum an ein Benutzergerät, UE, durch eine Basisstation, wobei der Suchraum einen gemeinsamen Suchraum und/oder einen gemeinsamen Suchraum einer UE-Gruppe umfasst und das DCI-Format Aufwärts- und Abwärtskonfigurationsinformationen trägt, die so konfiguriert sind, dass sie die Aufwärts- und Abwärtskonfiguration anzeigen,
**dadurch gekennzeichnet, dass** das DCI-Format eine Vielzahl von Steuerfeldern umfasst, wobei mindestens ein Steuerfeld die Uplink- und Downlink-Konfigurationsinformationen umfasst,
wobei, wenn die Basisstation ein UE-spezifisches DCI-Format in einem Teilrahmen sendet, in dem das DCI-Format, das die Uplink- und Downlink-Konfigurationsinformationen trägt, nicht gesendet wird, die Basisstation dynamische Anzeigeinformationen von Kanalzustandsinformationen, CSI, /Interferenzmessung, IM, in dem UE-spezifischen DCI-Format überträgt, so dass die Basisstation das UE dynamisch benachrichtigt, eine dynamische CSI/IM-Messung durchzuführen;
wobei die dynamische Anzeigeinformation von CSI/IM Gruppeninformation von CSI/IM und Teilrahmeninformation von CSI/IM umfasst.

**2.** Verfahren nach Anspruch 1, wobei

der gemeinsame Suchraum der UE-Gruppe ein Suchraum ist, der gemäß einer gemeinsamen temporären Funknetzidentität (Radio Network Temporary Identity, RNTI) einer UE-Gruppe bestimmt wird, oder ein Suchraum, der für die UE-Gruppe durch Signalisierung auf hoher Ebene konfiguriert wird, oder ein vordefinierter Suchraum der UE-Gruppe; oder,
das DCI-Format, das die Uplink- und Downlink-Konfigurationsinformationen trägt, dieselbe Anzahl von Bits hat wie ein UE-spezifisches DCI-Format X, das ein UE-spezifisches DCI-Format ist, das in dem gemeinsamen Suchraum der UE-Gruppe gesendet wird, oder dieselbe Anzahl von Bits hat wie eines der DCI-Formate, die in dem gemeinsamen Suchraum von der Basisstation gesendet werden, wobei X ein vordefinierter Wert ist.

**3.** Verfahren nach Anspruch 1, ferner umfassend:
Konfigurieren einer Sendeperiode und eines Sende-Teilrahmens des DCI-Formats, das die Uplink- und Downlink-Konfigurationsinformationen enthält, durch die Basisstation über eine Signalisierung auf hoher Ebene; oder Vereinbaren der Sendeperiode und des Sende-Teilrahmens durch eine sendende Partei und eine empfangende Partei, wobei es einen oder mehrere Sende-Teilrahmen gibt.

**4.** Verfahren nach Anspruch 3, wobei, wenn es mehrere Sende-Unterrahmen gibt, das Senden des DCI-Formats durch die Basisstation Folgendes umfasst: Auswählen eines der mehreren Sende-Unterrahmen zum Senden des DCI-Formats durch die Basisstation, wenn die Basisstation das DCI-Format in einem ersten Funkrahmen der Sendeperiode sendet.

**5.** Verfahren nach Anspruch 1, wobei, wenn das UE-spezifische DCI-Format in den gemeinsamen Suchraum der UE-Gruppe gesendet wird, das UE-spezifische DCI-Format ein DCI-Format X ist, wobei das UE-spezifische DCI-Format X dieselbe Anzahl von Bits hat wie das DCI-Format, das die Aufwärts- und Abwärtsstrecken-Konfigurationsinformationen trägt; oder wenn das UE-spezifische DCI-Format in den UE-spezifischen Suchraum gesendet wird, das UE-spezifische DCI-Format ein DCI-Format Y ist und das UE-spezifische DCI-Format Y eine andere Anzahl von Bits hat als das DCI-Format, das die Aufwärts- und Abwärtsstrecken-Konfigurationsinformationen trägt; wobei das DCI-Format, das die Uplink- und Downlink-Konfigurationsinformationen trägt, durch eine RNTI einer UE-Gruppe verschlüsselt ist, und das UE-spezifische DCI-Format durch eine RNTI des UE verschlüsselt ist.

**6.** Verfahren nach Anspruch 1,

wobei die Gruppeninformation von CSI/IM so konfiguriert ist, dass sie einen CSI-Mess-/Berichts-Teilrahmensatz anzeigt, zu dem ein Messergebnis gehört, das durch eine von dem UE auf der Grundlage von CSI/IM-Ressourcen durchgeführte CSI/IM-Messung erhalten wurde, wobei die CSI/IM-Ressourcen durch eine High-Layer-Konfiguration in zwei Gruppen konfiguriert sind, wobei eine Gruppe dem CSI-Mess-/Berichts-Teilrahmensatz 1 entspricht und die andere Gruppe dem CSI-Mess-/Berichts-Teilrahmensatz 1 oder 2 entspricht; und
die Subframe-Information von CSI/IM so konfiguriert ist, dass sie einen Subframe mit CSI/IM-Ressourcen anzeigt, auf dessen Grundlage das UE eine CSI/IM-Messung durchführt, wobei die CSI/IM-Ressourcen durch die High-Layer-Konfiguration in N Gruppen konfiguriert sind, wobei eine Gruppe dem CSI-Mess-/Berichts-Subframe-Set 1 entspricht und die verbleibenden N-1 Gruppen dem CSI-Mess-/Berichts-Subframe-Set 2 entsprechen.

**7.** Verfahren nach Anspruch 1, wobei das Übertragen des DCI-Formats an das UE durch die Basisstation umfasst:

in einem Trägeraggregierungssystem, wenn trägerübergreifendes Scheduling nicht für jede bedienende Zelle konfiguriert ist, Senden des DCI-Formats, das die Aufwärts- und Abwärtsstrecken-Konfigurationsinformationen enthält, durch die Basisstation in einem gemeinsamen Suchraum und einem gemeinsamen UE-Gruppensuchraum einer ersten primären bedienenden Zelle Pcell-X und einem gemeinsamen UE-Gruppensuchraum einer sekundären bedienenden Zelle Scell;
oder,
Senden des DCI-Formats, das die Aufwärts- und Abwärtsstrecken-Konfigurationsinformationen in einem gemeinsamen Suchraum und einem gemeinsamen UE-Gruppen-Suchraum einer Pcell-X enthält, durch die Basisstation;
oder,
Senden, durch die Basisstation, des DCI-Formats mit den Aufwärts- und Abwärtskonfigurationsinformationen in einem gemeinsamen Suchraum und einem gemeinsamen UE-Gruppen-Suchraum einer Pcell-X, einem gemeinsamen Suchraum und einem gemeinsamen UE-Gruppen-Suchraum einer zweiten primären bedienenden Zelle Pcell-Y und einem gemeinsamen UE-Gruppen-Suchraum einer Scell;
oder,
Senden, durch die Basisstation, des DCI-Formats, das die Aufwärts- und Abwärtsstrecken-Konfigurationsinformationen in einem gemeinsamen Suchraum und einem gemeinsamen UE-Gruppen-Suchraum einer Pcell-X und einem gemeinsamen Suchraum und einem gemeinsamen UE-Gruppen-Suchraum einer Pcell-Y enthält.

**8.** Basisstation, die umfasst: ein Sendemodul (1211), das so konfiguriert ist, dass es ein DCI-Format (Downlink Control Information) über einen PDCCH (Physical Downlink Control Channel) in einem Suchraum an ein Benutzergerät (UE) sendet, wobei der Suchraum einen gemeinsamen Suchraum und/oder einen gemeinsamen Suchraum einer UE-Gruppe umfasst und das DCI-Format Aufwärts- und Abwärtsstrecken-Konfigurationsinformationen enthält, die so konfiguriert sind, dass sie die Aufwärts- und Abwärtsstrecken-Konfiguration anzeigen

**dadurch gekennzeichnet, dass** das DCI-Format eine Vielzahl von Steuerfeldern umfasst, wobei mindestens ein Steuerfeld die Uplink- und Downlink-Konfigurationsinformationen umfasst, wobei, wenn die Basisstation (121) ein UE-spezifisches DCI-Format in einem Teilrahmen sendet, in dem das DCI-Format, das die Uplink- und Downlink-Konfigurationsinformationen trägt, nicht gesendet wird, die Basisstation dynamische Anzeigeinformationen von CSI/IM in dem UE-spezifischen DCI-Format trägt, so dass die Basisstation (121) das UE dynamisch benachrichtigt, eine dynamische CSI/IM-Messung durchzuführen;
wobei die dynamische Anzeigeinformation von CSI/IM Gruppeninformation von CSI/IM und Teilrahmeninformation von CSI/IM umfasst.

**9.** Basisstation nach Anspruch 8, wobei

das Sendemodul (1211) ferner so konfiguriert ist, dass es eine Sendeperiode und einen Sende-Teilrahmen des DCI-Formats konfiguriert, die die Uplink- und Downlink-Konfigurationsinformationen durch High-Layer-Signalisierung tragen; oder,
konfiguriert ist, um mit einer Gegenstelle an der Basisstation (121) die Sendeperiode und den Sende-Teilrahmen zu vereinbaren.

**10.** Computerlesbares Speichermedium, das einen Satz von computerausführbaren Befehlen umfasst, wobei die Befehle so konfiguriert sind, dass sie das Verfahren zur Meldung von Aufwärts- und Abwärtskonfigurationsinformationen nach einem der Ansprüche 1 bis 7 ausführen.

## Revendications

1. Procédé pour notifier des informations de configuration de liaison montante et de liaison descendante, comprenant :

   transmettre à un équipement d'utilisateur, UE (User Equipment), par une station de base, un format d'informations de commande de liaison descendante, DCI (Downlink Control Information), par l'intermédiaire d'un canal de commande de liaison descendante physique, PDCCH (Physical Downlink Control Channel), dans un espace de recherche, dans lequel l'espace de recherche comprend un espace de recherche commun et/ou un espace de recherche commun de groupe d'UE et le format DCI porte des informations de configuration de liaison montante et de liaison descendante configurées pour indiquer la configuration de liaison montante et de liaison descendante,
   **caractérisé en ce que**, le format DCI comprend une pluralité de champs de contrôle, dans lequel au moins un champ de contrôle comprend les informations de configuration de liaison montante et de liaison descendante, dans lequel, lorsque la station de base transmet un format DCI spécifique à l'UE sur une sous-trame où le format DCI portant les informations de configuration de liaison montante et de liaison descendante n'est pas transmis, la station de base transporte des informations d'indication dynamique d'informations d'état de canal, CSI (Channel State Information), / de mesure d'interférence, IM (Interference Measurement), dans le format DCI spécifique à l'UE, de sorte que la station de base notifie dynamiquement à l'UE d'effectuer une mesure CSI/IM dynamique ;
   dans lequel les informations d'indication dynamique de CSI/IM comprennent des informations de groupe de CSI/IM et des informations de sous-trame de CSI/IM.

2. Procédé selon la revendication 1, dans lequel

   l'espace de recherche commun de groupe d'UE est un espace de recherche déterminé selon une identité temporaire de réseau radio commune, RNTI (Radio Network Temporary Identity), d'un groupe d'UE, ou un espace de recherche configuré pour le groupe d'UE par une signalisation de couche supérieure, ou un espace de recherche de groupe d'UE prédéfini ; ou,
   le format DCI portant les informations de configuration de liaison montante et de liaison descendante a le même nombre de bits qu'un format DCI X spécifique à l'UE qui est un format DCI spécifique à l'UE transmis dans l'espace de recherche commun du groupe d'UE, ou a le même nombre de bits que l'un des formats DCI transmis dans l'espace de recherche commun par la station de base, le X étant une valeur prédéfinie.

3. Procédé selon la revendication 1, comprenant en outre :
   configure, par la station de base, une période de transmission et une sous-trame de transmission du format DCI portant les informations de configuration de liaison montante et de liaison descendante par l'intermédiaire d'une signalisation de couche supérieure ; ou, convenir de la période de transmission et la sous-trame de transmission par une partie émettrice et une partie réceptrice, dans lequel il y a une ou plusieurs sous-trames de transmission.

4. Procédé selon la revendication 3, dans lequel lorsqu'il y a de multiples sous-trames de transmission, transmettre, par la station de base, le format DCI comprend : sélectionner, par la station de base, une des multiples sous-trames de transmission pour transmettre le format DCI lorsque la station de base transmet le format DCI sur une première trame radio de la période de transmission.

5. Procédé selon la revendication 1, dans lequel lorsque le format DCI spécifique à l'UE est transmis dans l'espace de recherche commun du groupe d'UE, le format DCI spécifique à l'UE est un format DCI X, dans lequel le format DCI X spécifique à l'UE a un même nombre de bits que le format DCI portant les informations de configuration de liaison montante et de liaison descendante ; ou lorsque le format DCI spécifique à l'UE est transmis dans l'espace de recherche spécifique à l'UE, le format DCI spécifique à l'UE est un format DCI Y, et le format DCI Y spécifique à l'UE a un nombre de bits différent du format DCI portant les informations de configuration de liaison montante et de liaison descendante ; dans lequel
   le format DCI portant les informations de configuration de liaison montante et de liaison descendante est brouillé par un RNTI d'un groupe d'UE, et le format DCI spécifique à l'UE est brouillé par un RNTI de l'UE.

6. Procédé selon la revendication 1,

   dans lequel les informations de groupe de CSI/IM sont configurées pour indiquer un ensemble de sous-trames de mesure/rapport CSI auquel appartient un résultat de mesure obtenu par une mesure CSI/IM effectuée par l'UE sur la base de ressources CSI/IM, dans lequel les ressources CSI/IM sont configurées en deux groupes par une configuration de couche supérieure, dans lequel un groupe correspond à l'ensemble de sous-trames de mesure/rapport CSI 1, et l'autre groupe correspond à l'ensemble de sous-trames de mesure/rapport CSI 1 ou 2 ; et

les informations de sous-trame de CSI/IM sont configurées pour indiquer une sous-trame ayant des ressources CSI/IM sur la base desquelles l'UE effectue une mesure CSI/IM, dans laquelle les ressources CSI/IM sont configurées en N groupes par configuration de couche supérieure, dans laquelle un groupe correspond à l'ensemble de sous-trames de mesure/rapport CSI 1, et les N-1 groupes restants correspondent à l'ensemble de sous-trames de mesure/rapport CSI 2.

**7.** Procédé selon la revendication 1, dans lequel transmettre, par la station de base, le format DCI à l'UE comprend :

dans un système d'agrégation de porteuses, lorsque l'ordonnancement inter-porteuses n'est pas configuré pour chaque cellule de service, transmettre, par la station de base, le format DCI portant les informations de configuration de liaison montante et de liaison descendante dans un espace de recherche commun et un espace de recherche commun de groupe d'UE d'une première cellule de service primaire Pcell-X et un espace de recherche commun de groupe d'UE d'une cellule de service secondaire Scell ;

ou,

transmettre, par la station de base, le format DCI portant les informations de configuration de liaison montante et de liaison descendante dans un espace de recherche commun et un espace de recherche commun de groupe d'UE d'une cellule Pcell-X ;

ou,

transmettre, par la station de base, le format DCI contenant les informations de configuration de liaison montante et de liaison descendante dans un espace de recherche commun et un espace de recherche commun de groupe d'UE d'une Pcell-X, un espace de recherche commun et un espace de recherche commun de groupe d'UE d'une seconde cellule de service primaire Pcell-Y et un espace de recherche commun de groupe d'UE d'une Scell ;

ou,

transmettre, par la station de base, le format DCI portant les informations de configuration de liaison montante et de liaison descendante dans un espace de recherche commun et un espace de recherche commun de groupe d'UE d'une Pcell-X, et un espace de recherche commun et un espace de recherche commun de groupe d'UE d'une Pcell-Y.

**8.** Station de base, comprenant : un module de transmission (1211), configuré pour transmettre un format d'informations de contrôle de liaison descendante, DCI, à un équipement utilisateur, UE, par un canal de contrôle de liaison descendante physique, PDCCH, dans un espace de recherche, dans lequel l'espace de recherche comprend un espace de recherche commun et/ou un espace de recherche commun de groupe d'UE et le format DCI porte des informations de configuration de liaison montante et de liaison descendante configurées pour indiquer la configuration de liaison montante et de liaison descendante,

**caractérisé en ce que**, le format DCI comprend une pluralité de champs de contrôle, dans lequel au moins un champ de contrôle comprend les informations de configuration de liaison montante et de liaison descendante, dans lequel lorsque la station de base (121) transmet un format DCI spécifique à l'UE sur une sous-trame où le format DCI portant les informations de configuration de liaison montante et de liaison descendante n'est pas transmis, la station de base transporte des informations d'indication dynamique de CSI/IM dans le format DCI spécifique à l'UE, de sorte que la station de base (121) notifie dynamiquement à l'UE d'effectuer une mesure CSI/IM dynamique ;

dans lequel les informations d'indication dynamique de CSI/IM comprennent des informations de groupe de CSI/IM et des informations de sous-trame de CSI/IM.

**9.** Station de base selon la revendication 8, dans laquelle
le module de transmission (1211) est en outre configuré pour configurer une période de transmission et une sous-trame de transmission du format DCI portant les informations de configuration de liaison montante et de liaison descendante par une signalisation de couche supérieure ; ou, configuré pour convenir avec une partie opposée à la station de base (121) sur la période de transmission et la sous-trame de transmission.

**10.** Support de stockage lisible par ordinateur, comprenant un ensemble d'instructions exécutables par ordinateur, les instructions étant configurées pour exécuter le procédé de notification d'informations de configuration de liaison montante et de liaison descendante selon l'une quelconque des revendications 1 à 7.

Fig. 1

Radio frame, $T_f$ = 307200$T_s$ = 10 ms
Half frame, 153600$T_s$ = 5 ms
Time slot, $T_{slot}$=15360$T_s$
30720$T_s$
Subframe #0
Subframe #2
Subframe #3
Subframe #4
Subframe #5
Subframe #7
Subframe #8
Subframe #9
Subframe, 30720$T_s$
DwPTS GP UpPTS
DwPTS GP UpPTS

Fig. 2

UE performs PDCCH blind detection in a search space candidate of a subframe candidate, and acquires a DCI format
201
the UE acquires dynamic indication information of CSI/IM from the DCI format
202

Fig. 3

40ms
40ms
0 1 2 3 4 5 6 7 8 9
... ...
0 1 2 3 4 5 6 7 8 9
... ...
0 1 2 3 4 5 6 7 8 9

Fig. 4

Radio frame #n
Configuration 0
Radio frame #n+1
Configuration 1
0 1 2 3 4 5 6 7 8 9 0 1 2 3 4 5 6 7 8 9
Interference TP
Serving TP 2 CSI dynamic groups
Set 1
Set 2
Set 1
Configuration 2

D S U Fixed subframe
In IMR-n

Fig. 5

TDD_index 1
TDD_index 2
Control field 1
Control field 2
... ...
Control field N
CRC
Uplink and downlink configuration information
Interference group information
3 bits
1 bit
TDD_RNTI scrambling

Fig. 6

| Group information bit | CSI measurement/reporting subframe set |
|---|---|
| 0 | 1 |
| 1 | 2 |

Fig. 7

TDD_index 1
TDD_index 2
Control field 1
Control field 2
... ...
Control field N
CRC
TDD_RNTI scrambling
Uplink and downlink configuration information
IM subframe
3 bits
k bit

Fig. 8

| Subframe information bit | IMR configured by a high layer |
|---|---|
| 0 | 2 |
| 1 | 3 |

Fig. 9

| Subframe information bit | Subframe corresponding to IMR configured by a high layer |
|---|---|
| 0 | First configured flexible subframe |
| 1 | Second configured flexible subframe |

Fig. 10

| Subframe information bit | Subframe corresponding to IMR configured by a high layer |
|---|---|
| 00 | First configured flexible subframe |
| 01 | Second configured flexible subframe |
| 10 | Third configured flexible subframe |
| 11 | Fourth configured flexible subframe |

Fig. 11

| Subframe information bit | Subframe corresponding to IMR configured by a high layer |
|---|---|
| 000 | First configured flexible subframe |
| 001 | Second configured flexible subframe |
| 010 | Third configured flexible subframe |
| 011 | Fourth configured flexible subframe |
| 100 | Fifth configured flexible subframe |
| 101~111 | Reserved |

| Subframe information bit | Flexible subframe index |
|---|---|
| 000 | #3 |
| 001 | #4 |
| 010 | #7 |
| 011 | #8 |
| 100 | #9 |
| 101~111 | Reserved |

Fig. 12

sending module
1211
base station 121

Fig. 13

detection and
acquisition module
1311
sending module
1312
UE 131

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **LG ELECTRONICS ; SAMSUNG ; ZTE ; POTEVIO ; INTEL CORPRATION.** *In 3GPP TSG RAN WG1 Meeting #74*
- **LG ELECTRONICS.** Details of UL-DL Reconfiguration Message. *3GPP draft R1-133366*